# EUROPÄISCHE PATENTANMELDUNG

(11) **EP 3 613 522 A1**
(43) Veröffentlichungstag der Anmeldung: **26.02.2020**
(21) Anmeldenummer: 18189844.6
(22) Anmeldetag: 21.08.2018
(51) Int. Cl.: B22F 3/00, B22F 3/20, B28B 1/00, B33Y 10/00

(54) **VERFAHREN ZUM HERSTELLEN EINES BAUTEILS DURCH AUFBRINGEN VON PARTIKELGEFÜLLTEN DISKRETEN VOLUMENELEMENTEN**

(71) Anmelder: Siemens Aktiengesellschaft, 80333 München (DE)
(72) Erfinder: Schuh, Carsten, 85598 Baldham (DE)

(57) **Zusammenfassung**

Die Erfindung betrifft ein Verfahren zum Herstellen eines Bauteils (4) mit den Schritten: Bereitstellen eines Ausgangsmaterials (2), welches Metallpartikel und/oder Keramikpartikel umfasst, Herstellen eines Grünkörpers (3) aus dem Ausgangsmaterial (2), wobei zum Herstellen des Grünkörpers (3) in zeitlich aufeinanderfolgenden Schritten jeweils ein Teil des Ausgangsmaterials (2) mittels einer Düse (1) auf ein Substrat (5) und/oder auf einen zuvor aufgetragenen Teil des Ausgangsmaterials (2) aufgetragen wird und thermisches Behandeln des hergestellten Grünkörpers (3), wobei in den zeitlich aufeinanderfolgenden Schritten das Ausgangsmaterial (2) jeweils in Form von diskreten Volumenelementen (7) aufgetragen wird, wobei die jeweiligen Volumenelemente (7) das gleiche Volumen aufweisen, und die jeweiligen Volumenelemente (7) auf dem Substrat (5) und/oder auf einem zuvor aufgetragenen Volumenelement (7) aufgesetzt werden.

## Beschreibung

Die vorliegende Erfindung betrifft ein Verfahren zum Herstellen eines Bauteils, bei welchem ein Ausgangsmaterial bereitgestellt wird, welches Metallpartikel und/oder Keramikpartikel umfasst. Des Weiteren wird ein Grünkörper aus dem Ausgangsmaterial hergestellt. Zum Herstellen des Grünkörpers wird in zeitlich aufeinanderfolgenden Schritten jeweils ein Teil des Ausgangsmaterials mittels einer Düse auf ein Substrat und/oder auf einen zuvor aufgetragenen Teil des Ausgangsmaterials aufgetragen. Im Anschluss wird dann der hergestellte Grünkörper thermisch behandelt.

Das Interesse richtet sich auf die Herstellung von Bauteilen und insbesondere auf die Herstellung komplexer dreidimensionaler Strukturen. Insbesondere soll das Bauteil aus einer Metall(-legierung), einer Keramik und/oder einem Kompositmaterial gefertigt werden. Aus diesem partikelgefüllten Ausgangsmaterial soll ein Grünkörper hergestellt werden, der anschließend thermisch bearbeitet wird.

In diesem Zusammenhang sind aus dem Stand der Technik unterschiedliche additive Fertigungsverfahren bekannt, welche sich zur Erzeugung von dreidimensionalen Bauteilen oder Körpern durch die Herstellung eines Grünkörpers aus partikelgefüllten thermoplastischen Massen oder Schlickern mit anschließender Sinterung eignen. Beispielsweise ist die Lithographiebasierte Keramikfertigung bekannt, bei welcher analog zur Stereolithograhie mit Licht einer definierten Wellenlänge eine radikalische Polymerisation eines Bindersystems erfolgt, wodurch eine Suspension verfestigt wird. Zudem ist die sogenannte Schmelz-Extrusion bekannt, bei welcher beispielsweise thermoplastische Massen, Feedstocks und Filamente bearbeitet werden können. Hierbei wird eine thermoplastische Masse durch Wärmezufuhr in einen fließfähigen Zustand überführt und an der gewünschten Stelle abgeschieden. Dort erstarrt die Masse sofort wieder bei der Abkühlung. Ferner ist die 3D-Extrusion oder das sogenannte Robocasting bekannt. Hierbei können kalte viskose beziehungsweise plastische Massen über eine Düse extrudiert und abgelegt werden. In diesem Fall können entweder Massen auf Basis natürlicher Rohstoffe, beispielsweise Porzellan, Ton oder dergleichen, verarbeitet werden. Alternativ dazu können Massen auf Basis synthetischer Rohstoffe, bei denen die Plastizität durch organische Additive erreicht wird, verwendet werden. Bei diesem Verfahren wird ein kontinuierlicher Strang in Bahnen entlang der Bauteilgeometrie abgelegt. Ferner ist der direkte 3D-Druck mittels Suspensionen bekannt. In diesem Fall können beispielsweise (nano-)partikelgefüllten Tinten gedruckt werden. Darüber hinaus sind sogenannte aerosol-basierte Verfahren bekannt. Schließlich sind aus dem Stand der Technik Laminier-Verfahren bekannt, bei denen ein Formkörper durch schichtweises Laminieren aufgebaut wird. Hierbei wird jede Schicht nach dem Auftragen entsprechend einer Modellvorgabe zugeschnitten. Erst dann erfolgt das Auftragen der nächsten Schicht.

Es ist Aufgabe der vorliegenden Erfindung, eine Lösung aufzuzeigen, wie die Herstellung eines Bauteils, insbesondere eines komplexen dreidimensionalen Bauteils, verbessert werden kann.

Diese Aufgabe wird erfindungsgemäß durch ein Verfahren mit den Merkmalen des Patentanspruchs 1 gelöst. Vorteilhafte Weiterbildungen der vorliegenden Erfindung sind in den abhängigen Ansprüchen angegeben.

Ein erfindungsgemäßes Verfahren dient zum Herstellen eines Bauteils. Das Verfahren umfasst das Bereitstellen eines Ausgangsmaterials, welches Metallpartikel und/oder Keramikpartikel umfasst. Zudem umfasst das Verfahren das Herstellen eines Grünkörpers aus dem Ausgangsmaterial. Zum Herstellen des Grünkörpers wird in zeitlich aufeinanderfolgenden Schritten jeweils ein Teil des Ausgangsmaterials mittels einer Düse auf ein Substrat und/oder auf einen zuvor aufgetragenen Teil des Ausgangsmaterials aufgetragen. Im Anschluss daran wird der hergestellte Grünkörper thermisch behandelt. Dabei ist vorgesehen, dass in zeitlich aufeinanderfolgenden Schritten das Ausgangsmaterial jeweils in Form von diskreten Volumenelementen aufgetragen wird, wobei die jeweiligen Volumenelemente das gleiche Volumen aufweisen. Darüber hinaus werden die jeweiligen Volumenelemente auf dem Substrat und/oder auf einem zuvor aufgetragenen Volumenelement aufgesetzt.

Mithilfe des Verfahrens soll ein Bauteil und insbesondere ein komplexes dreidimensionales Bauteil hergestellt werden. Bei dem Bauteil kann es sich insbesondere um ein Teil einer elektrischen oder elektronischen Komponente handeln. Beispielsweise kann das Bauteil Bestandteil einer elektrischen Maschine, eines Transformators, eines Elektronikbauteils oder dergleichen sein. Zum Herstellen des Bauteils wird zunächst das Ausgangsmaterial bereitgestellt. Das Ausgangsmaterial umfasst Metallpartikel und/oder Keramikpartikel. Es wird also ein partikelgefülltes Ausgangsmaterial bereitgestellt. Es kann auch vorgesehen sein, dass das Ausgangsmaterial Partikel einer Metalllegierung und/oder eines Kompositwerkstoffs umfasst. Zum Herstellen des Grünkörpers wird das Ausgangsmaterial verwendet. Zu diesem Zweck wird das Ausgangsmaterial durch eine Düse gefördert beziehungsweise mittels einer Düse abgegeben. Dabei kann das Ausgangsmaterial auf das Substrat beziehungsweise ein entsprechendes Trägerelement aufgebracht werden. Hierbei erfolgt die Abgabe des Ausgangsmaterials beziehungsweise von jeweiligen Teilen des Ausgangsmaterials in mehreren zeitlich aufeinanderfolgenden Schritten. Das Ausgangsmaterial wird in den jeweiligen Schritten übereinander und/oder nebeneinander abgegeben, sodass der dreidimensionale Grünkörper geformt wird. Im Anschluss daran wird der Grünkörper thermisch behandelt. Insbesondere ist es vorgesehen, dass ein sogenanntes Entbindern und Sintern durchgeführt wird, um das Bauteil herzustellen.

Gemäß einem wesentlichen Aspekt der vorliegenden Erfindung ist es vorgesehen, dass in den zeitlich aufeinanderfolgenden Schritten mittels der Düse jeweils diskrete Volumenelemente abgegeben werden. Zudem ist es vorgesehen, dass diese Volumenelemente das gleiche Volumen aufweisen. Zudem werden die jeweiligen Volumenelemente auf das Substrat und/oder auf bereits aufgetragene Volumenelemente aufgesetzt. Bei dem Herstellungsprozess werden also diskrete Volumenelemente nacheinander abgelegt. Diese Volumenelemente sind so ausgebildet, dass diese jeweils das gleiche Volumen beziehungsweise die gleiche Größe aufweisen. Zudem kann es vorgesehen sein, dass die Volumenelemente die gleiche Form aufweisen. Die jeweiligen Volumenelemente können beispielsweise im Wesentlichen quaderförmig, kugelförmig, zylinderförmig oder dergleichen sein. Insbesondere ist es nicht vorgesehen, dass das Ausgangsmaterial entlang definierter Bahnen aufgetragen wird. Die jeweiligen Volumenelemente können nacheinander an vorbestimmten Positionen abgelegt werden.

Zudem ist es vorgesehen, dass die jeweiligen Volumenelemente aufgesetzt werden. Im Vergleich zu Druckverfahren, bei denen ein flüssiges Ausgangsmaterial auf ein Substrat gespritzt wird, ist es gemäß der Erfindung vorgesehen, dass ein pastöses oder viskoses Ausgangsmaterial in Form eines Volumenelements abgesetzt wird. Bei dem Absetzen ist das Volumenelement sowohl mit dem Substrat beziehungsweise dem bereits zuvor aufgetragenen Volumenelement und/oder mit der Düse in Kontakt. Beispielsweise kann bei dem Auflegen eine kraftschlüssige Verbindung zwischen dem Ausgangsmaterial und der Düse vorliegen. Es ist also insbesondere vorgesehen, dass das Ausgangsmaterial nicht berührungslos mit der Düse aufgetragen wird. Aus den diskreten Volumenelementen kann dann der Grünkörper ausgebildet werden und im Anschluss daran behandelt beziehungsweise entbindert und gesintert werden. Das erfindungsgemäße Verfahren unterscheidet sich von bekannten Prozessen der additiven Fertigung beziehungsweise von bekannten 3D-Druckverfahren insbesondere durch die Art der Generierung der einzelnen Volumenelemente, welche auch als Materialpixel bezeichnet werden können. Durch die Aufteilung der Volumenelemente, die gezielte Formgebung der Volumenelemente und die Ablage der Volumenelemente kann eine hohe Detailgenauigkeit erreicht werden. Zudem kann eine verbesserte Oberflächenqualität mit einer geringen Rauigkeit und Trennschärfe erzielt werden.

Bevorzugt wird durch das Aufsetzen der Volumenelemente auf das Substrat und/oder auf das zuvor aufgetragene Volumenelement der Grünkörper in einer dreidimensionalen Form hergestellt. Die Herstellung des Grünkörpers kann mit einer entsprechenden Druckvorrichtung durchgeführt werden, welche die Düse aufweist. Es kann auch vorgesehen sein, dass die Druckvorrichtung mehrere Düsen aufweist. Dabei kann die Düse relativ zu dem Substrat bewegt werden. Diese Düse kann entlang von zwei oder drei Raumrichtungen translatorisch bewegbar sein. Zudem kann es vorgesehen sein, dass die Düse entlang der Raumrichtungen gedreht werden kann. Somit ist die additive Fertigung in allen drei Raumrichtungen möglich und nicht nur in Form eines planaren Schichtaufbaus.

Gemäß einer Ausführungsform umfasst das Ausgangsmaterial ein Lösungsmittel und das Ausgangsmaterial wird durch die Düse gefördert. Mit anderen Worten kann das Ausgangsmaterial ein sogenannter Schlicker sein, der zusätzlich zu den Partikeln ein entsprechendes Lösungsmittel umfasst. Dieses Lösungsmittel kann wässrig oder organisch sein. Somit kann dieses Ausgangsmaterial beziehungsweise der Schlicker mittels der Druckvorrichtung gefördert werden und aus der Düse ausgegeben beziehungsweise extrudiert werden. Eine derartige Suspension beziehungsweise ein derartiger Schlicker kann im Vergleich zu entsprechenden partikelgefüllten Nanotinten kostengünstig hergestellt werden. Zudem ergibt sich eine breite Anpassbarkeit der partikelgefüllten Suspension hinsichtlich der Rheologie und des Füllgrads. Außerdem ergibt sich ein geringer Einfluss auf die Erzeugung der Volumenelemente und deren Ablage im Vergleich zu Tinten.

Gemäß einer alternativen Ausführungsform umfasst das Ausgangsmaterial ein thermoplastisches Material. Es kann auch vorgesehen sein, dass das Ausgangsmaterial ein thermoplastisches Material ist. Zudem wird das Ausgangsmaterial zum Fördern durch die Düse bevorzugt erwärmt und/oder plastifiziert. Bei dem Ausgangsmaterial kann es sich um einen sogenannten Feedstock, also eine partikelgefüllte thermoplastische Masse ohne Lösungsmittel, handeln. Zum Bereitstellen des Volumenelements kann dieser Feedstock zumindest bereichsweise erwärmt und/oder plastifiziert werden. Zu diesem Zweck kann eine entsprechende Heizeinrichtung der Druckvorrichtung verwendet werden. Es kann auch vorgesehen sein, dass die Düse eine entsprechende Heizeinrichtung aufweist. Zudem kann es vorgesehen sein, dass das Ausgangsmaterial mit einem Druck beaufschlagt wird. Auch ein Ausgangsmaterial in Form eines Feedstocks kann kostengünstig bereitgestellt werden. Auch hier ergeben sich die Vorteile durch die Anpassbarkeit der Materialeigenschaften.

Gemäß einer alternativen Ausführungsform wird das Ausgangsmaterial als partikelgefülltes Filament bereitgestellt. Mit anderen Worten kann das Ausgangsmaterial also in Form einer Faser beziehungsweise eines Drahtes bereitgestellt werden. Auch hier kann es vorgesehen sein, dass dieses Ausgangsmaterial in Form des Filaments zum Bereitstellen des Volumenelements entsprechend erwärmt oder plastifiziert wird. Alternativ oder zusätzlich kann es vorgesehen sein, dass zum Bereitstellen des Volumenelements ein Teil des Filaments abgetrennt wird. Somit kann der Grünkörper mit geringem Aufwand präzise hergestellt werden.

Das Herstellungsverfahren kann zudem entsprechend skaliert werden. Um beispielsweise große Bauteile oder Grünkörper herzustellen, können größere Volumenelemente bereitgestellt werden. Zu diesem Zweck kann beispielsweise die Formgebung der Düse entsprechend angepasst werden. Zudem kann die Größe der Partikel angepasst werden. Es kann auch vorgesehen sein, dass beispielsweise Filamente mit einem größeren Durchmesser verwendet werden. Darüber hinaus kann das Verfahren auch in Richtung der Herstellung von Mikrobauteilen skaliert werden. Beispielsweise können hier entsprechend kleinere Düsen verwendet werden. Bei dem verwendeten Ausgangsmaterial ergibt sich der Vorteil, dass die Strömungsdynamik im Vergleich zu flüssigen Materialien keinen oder nur einen geringen Einfluss hat. Grundsätzlich können durch das partikelgefüllte Ausgangsmaterial auch größere Bauvolumina realisiert werden aufgrund der hohen Eigensteifigkeit des erzeugten Grünkörpers.

Weiterhin ist vorteilhaft, wenn das Volumenelement mit dem Substrat und/oder dem bereits aufgetragenen Volumenelement bei dem Aufsetzen formschlüssig verbunden wird. Die jeweiligen Volumenelemente können also so aufeinander und/oder nebeneinander angeordnet werden, dass die jeweiligen Volumenelemente formschlüssig miteinander verbunden sind. Mit anderen Worten wird ein Formschluss des Volumenelements der bereits gebauten Struktur erzeugt. Hierdurch kann nach der thermischen Behandlung des Grünkörpers beziehungsweise nach dem Sintern eine verringerte Porosität erreicht werden. Dies bedeutet, dass sich nach dem Sintern eine dichte, homogene Mikrostruktur ergibt.

In einer weiteren Ausführungsform wird das Volumenelement bei dem Aufsetzen mit einer vorbestimmten Kraft auf das Substrat und/oder das bereits aufgetragene Volumenelemente gedrückt. Beispielsweise kann ein Teil des Ausgangsmaterials, der das Volumenelement bildet, vor dem Abtrennen von der Düse entsprechend komprimiert beziehungsweise in die bereits vorhandene Struktur gedrückt werden. Dadurch kann die Dichte des Ausgangsmaterials beziehungsweise des Volumenelements erhöht werden und somit Porosität verringert werden. Zu diesem Zweck kann beispielsweise die Düse beim Fördern des Ausgangsmaterials, sobald der Teil des Ausgangsmaterials, der das Volumenelement bildet, aus der Düse ausgetreten ist, in Richtung des Substrats und/oder des bereits abgegebenen Volumenelements bewegt werden.

Gemäß einer weiteren Ausführungsform wird das Volumenelement nach dem Aufsetzen plastisch verformt. Hierzu kann beispielsweise ein separates Werkzeug verwendet werden, mit dem die Formgebung des Volumenelements nach dem Aufsetzen verändert wird. Somit ergeben sich weitere Gestaltungsmöglichkeiten bei der Herstellung des Grünkörpers. Es kann auch vorgesehen sein, dass zur plastischen Verformung des aufgetragenen Volumenelements die Düse oder ein Teil davon verwendet wird. Zudem kann die Form des abgelegten Volumenelements durch die Formgebung der Düse beeinflusst werden. Beispielsweise kann die Düse einen runden, einen elliptischen oder rechteckigen Querschnitt aufweisen.

Weiterhin ist es vorteilhaft, wenn zum Aufsetzen des Volumenelements der Teil des Ausgangsmaterials von der Düse getrennt wird. Das Ausgangsmaterial kann durch die Düse gefördert werden, sodass das Ausgangsmaterial beziehungsweise der Teil des Ausgangsmaterials aus der Düse austritt, aber das Ausgangsmaterial noch mit der Düse in Kontakt ist. Zum Abtrennen des Ausgangsmaterials von der Düse kann eine entsprechende Trenneinrichtung verwendet werden. Bei der Trenneinrichtung kann es sich beispielsweise um einen entsprechenden Draht, ein Messer oder dergleichen handeln. Es kann auch vorgesehen sein, dass das Ausgangsmaterial zum Abtrennen lokal erwärmt wird. Zum Erwärmen und/oder Plastifizieren des Ausgangsmaterials kann beispielsweise Infrarotstrahlung, eine induktive Heizeinrichtung, ein Laser oder dergleichen verwendet werden. Zudem kann es vorgesehen sein, dass zum Abtrennen des Ausgangsmaterials die Düse entsprechend bewegt wird. Beispielsweise kann das Volumenelement durch eine entsprechende Streckung und/oder Überdehnung des Ausgangsmaterials abgetrennt werden. Dies ermöglicht insgesamt eine präzise Herstellung der jeweiligen Volumenelemente.

In einer weiteren Ausführungsform wird nach dem Aufsetzen zumindest eines Volumenelements eine Kühlung und/oder Trocknung mittels eines Gasstroms durchgeführt. Diese Kühlung und/oder Trocknung kann nach dem Ablegen jedes einzelnen Volumenelements durchgeführt werden. Es kann auch vorgesehen sein, dass die Kühlung und/oder Trocknung durchgeführt wird, nachdem eine vorbestimmte Anzahl an Volumenelementen oder alle Volumenelemente abgelegt wurden. Für die Kühlung und/oder Trocknung kann ein (Kalt-)Gasstrom verwendet werden, der lokal auf die Volumenelemente beziehungsweise den Grünkörper gelenkt wird. Auf diese Weise kann die Abkühlung und/oder Trocknung forciert werden.

Es kann auch vorgesehen sein, dass zum Herstellen des Grünkörpers zumindest ein weiteres Ausgangsmaterial verwendet wird. Auch das weitere Ausgangsmaterial kann Metallpartikel und/oder Keramikpartikel umfassen. Grundsätzlich kann es auch vorgesehen sein, dass mehrere Ausgangsmaterialien für die Herstellung des Grünkörpers verwendet werden. Diese Ausgangsmaterialien können sich bezüglich der Art der Partikel und/oder der Konzentration der Partikel voneinander unterscheiden. Somit wird es beispielsweise ermöglicht, das Grünkörper mit einer Gradierung beziehungsweise unterschiedlichen Konzentrationen und/oder Volumenanteilen der Partikel hergestellt werden können.

Weitere Merkmale der Erfindung ergeben sich aus den Ansprüchen, den Figuren und der Figurenbeschreibung. Die vorstehend in der Beschreibung genannten Merkmale und die Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Düse einer Druckeinrichtung, mittels welcher ein Volumenelement aus einem Ausgangsmaterial auf einem Substrat abgelegt wird; und
- FIG 2: eine Mehrzahl von aufeinander abgelegten Volumenelementen, welche einen Grünkörper bilden.

In den Figuren werden gleiche oder funktionsgleiche Elemente mit den gleichen Bezugszeichen versehen.

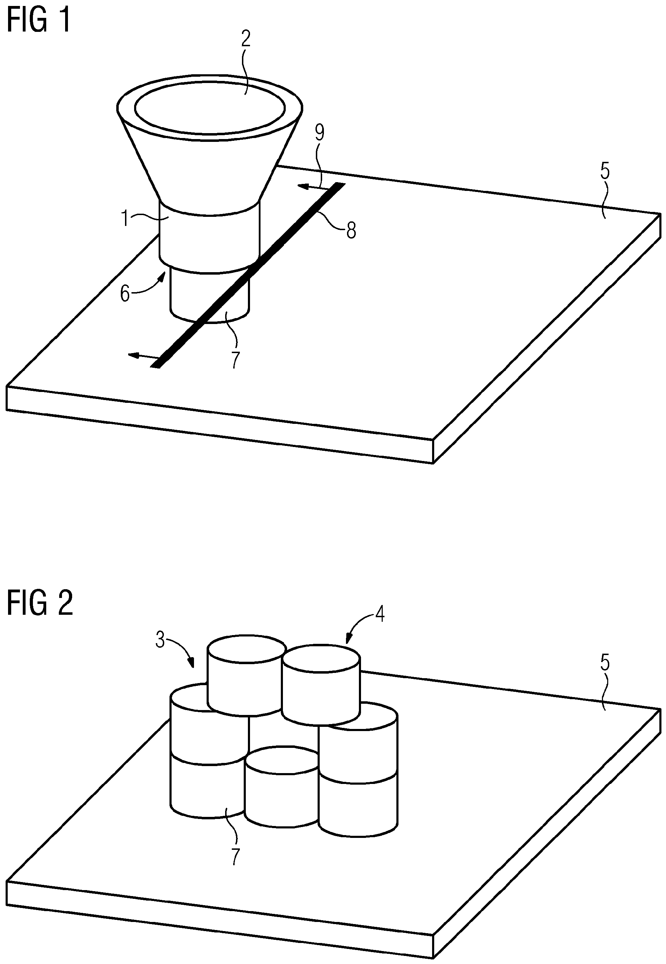

FIG 1 zeigt in einer stark vereinfachten Darstellung eine Düse 1, mittels welcher ein Ausgangsmaterial 2 abgegeben werden kann. Bei dem Ausgangsmaterial 2 handelt es sich um ein Material, welches Metallpartikel und/oder Keramikpartikel umfasst. Es kann auch vorgesehen sein, dass das Ausgangsmaterial Partikel einer Metalllegierung und/oder eines Kompositwerkstoffs umfasst. Aus diesem Ausgangsmaterial 2 soll zunächst ein Grünkörper 3 gefertigt werden und anschließend ein Bauteil 4 hergestellt werden.

Dabei kann das Ausgangsmaterial 2 als Schlicker beziehungsweise Suspension bereitgestellt werden. In diesem Fall umfasst das Ausgangsmaterial 2 neben den Metallpartikeln und/oder Keramikpartikeln ein Lösungsmittel, welches wässrig oder organisch sein kann. Das Ausgangsmaterial 2 kann pastös sein und eine vorbestimmte Viskosität aufweisen. Als Ausgangsmaterial kann auch ein sogenannter Feedstock verwendet werden, wobei in diesem Fall das Ausgangsmaterial 2 zusätzlich ein thermoplastisches Material umfasst. Ferner kann es vorgesehen sein, dass das Ausgangsmaterial in Form eines Filaments bereitgestellt wird. Dieses Ausgangsmaterial 2 wird mittels der Düse 1 gefördert, um zunächst auf ein Substrat 5 aufgebracht zu werden. Dabei weist das Ausgangsmaterial eine vorbestimmte Viskosität auf. Wie vorliegend in FIG 1 zu erkennen ist, tritt das Ausgangsmaterial 2 an einer Ausgangsöffnung 6 aus und bleibt hierbei in Kontakt mit der Düse 1.

Bei dem Druckverfahren werden in zeitlich aufeinanderfolgenden Schritten jeweils diskrete Volumenelemente 7 bereitgestellt. Diese Volumenelemente 7 werden bei dem Verfahren zunächst auf das Substrat 5 aufgesetzt. Mit den weiteren Schritten können die Volumenelemente 7 auf das Substrat 5 und/oder auf bereits aufgetragene Volumenelemente 7 aufgesetzt werden. Dabei weisen die jeweiligen Volumenelemente 7 das gleiche Volumen auf. In dem vorliegenden Ausführungsbeispiel sind die Volumenelementen 7 zylinderförmig ausgebildet. Diese Formgebung ergibt sich durch die Form der Düse 1. Die Volumenelemente 7 können auch eine andere Form aufweisen.

Bei dem Aufsetzen der jeweiligen Volumenelemente 7 können diese mittels der Düse 1 mit einer vorbestimmten Kraft gegen das Substrat 5 und/oder das bereits aufgesetzte Volumenelemente 7 gedrückt werden. Um das Volumenelemente 7 aufzulegen, kann das Ausgangsmaterial, welches aus der Austrittsöffnung 6 der Düse ausgetreten ist, mittels einer Trenneinrichtung 8 getrennt werden. Vorliegend ist schematisch eine Trenneinrichtung 8 in Form eines Drahts dargestellt, welcher entlang der Richtung der Pfeile 9 bewegt werden kann, um das aus der Düse 1 austretende Ausgangsmaterial 2 von der Düse 1 abzutrennen und somit das Volumenelement 7 aufzulegen.

FIG 2 zeigt beispielhaft eine Mehrzahl von Volumenelementen 7, welche nebeneinander und übereinander auf dem Substrat 5 abgelegt sind. Hierbei kann es vorgesehen sein, dass vor dem Ablegen des jeweiligen Volumenelements 7 die Oberfläche des Substrats 5 und/oder des bereits abgelegten Volumenelements 7 entsprechend vorbehandelt wird. Beispielsweise kann eine Vorerwärmung beziehungsweise eine Anlösung durchgeführt werden. Bei einem Ausgangsmaterial in Form eines Schlickers kann eine entsprechende Befeuchtung durchgeführt werden. Insbesondere werden die jeweiligen Volumenelemente 7 derart aufgelegt, dass diese einen Formschluss zueinander aufweisen. Zudem kann es vorgesehen sein, dass die jeweiligen Volumenelemente 7 nach dem Auflegen entsprechend plastisch verformt werden. Darüber hinaus kann nach dem Ablegen der Volumenelemente eine forcierte Abkühlung und/oder Trocknung durch einen lokalen Gasstrom vorgesehen sein.

Durch die jeweiligen Volumenelemente 7 wird ein dreidimensionaler Grünkörper 3 gebildet. Um das Bauteil 4 herstellen zu können, kann dieser dreidimensionale Grünkörper 3 entsprechend thermisch behandelt werden. Insbesondere ist es vorgesehen, dass eine sogenannte Entbinderung und Sinterung durchgeführt wird.

Durch die Aufteilung des Ausgangsmaterials in die Volumenelemente 7, welche auch als Materialpixel bezeichnet werden können, kann eine gezielte Formung der Volumenelemente 7, eine Trennung vom Materialtransport sowie die Formgebung und/oder Ablage der Volumenelemente 7 mit einer hohen Detailgenauigkeit erreicht werden. Insbesondere kann eine hohe Oberflächenqualität mit einer geringen Rauigkeit und eine Trennschärfe erzielt werden. Durch die Ablage der Materialpixel beziehungsweise Volumenelemente 7 im Formschluss inklusive der optionalen zusätzlichen plastischen Kompression kann die Gründichte des Grünkörpers 3 erhöht werden und somit Porositäten verringert werden. In dem Bauteil 4 ergibt sich dadurch eine dichte, homogene Mikrostruktur nach dem Sintern. Ferner kann die Auftragung der Volumenelemente 7 beziehungsweise des Materials mit einer hohen Rate durchgeführt werden. Ferner ergibt sich der Vorteil der Verwendung kostengünstiger, zeitstabiler Suspensionen und/oder Feedstocks. Außerdem ergibt sich eine breite Anpassbarkeit des partikelgefüllten Ausgangsmaterials hinsichtlich Rheologie und Füllgrad. Des Weiteren ist das Verfahren entsprechend skalierbar.

## Patentansprüche

1. Verfahren zum Herstellen eines Bauteils (4) mit den Schritten:
- Bereitstellen eines Ausgangsmaterials (2), welches Metallpartikel und/oder Keramikpartikel umfasst,
- Herstellen eines Grünkörpers (3) aus dem Ausgangsmaterial (2),
- wobei zum Herstellen des Grünkörpers (3) in zeitlich aufeinanderfolgenden Schritten jeweils ein Teil des Ausgangsmaterials (2) mittels einer Düse (1) auf ein Substrat (5) und/oder auf einen zuvor aufgetragenen Teil des Ausgangsmaterials (2) aufgetragen wird und
- thermisches Behandeln des hergestellten Grünkörpers (3), **dadurch gekennzeichnet, dass**
- in den zeitlich aufeinanderfolgenden Schritten das Ausgangsmaterial (2) jeweils in Form von diskreten Volumenelementen (7) aufgetragen wird, wobei die jeweiligen Volumenelemente (7) das gleiche Volumen aufweisen, und
- die jeweiligen Volumenelemente (7) auf dem Substrat (5) und/oder auf einem zuvor aufgetragenen Volumenelement (7) aufgesetzt werden.

2. Verfahren nach Anspruch 1, **dadurch gekennzeichnet, dass** durch das Aufsetzen der Volumenelemente (7) auf das Substrat (5) und/oder auf das zuvor aufgetragenen Volumenelement (7) der Grünkörper (3) mit einer dreidimensionalen Form hergestellt wird.

3. Verfahren nach Anspruch 1 oder 2, **dadurch gekennzeichnet, dass** das Ausgangsmaterial (2) ein Lösungsmittel umfasst und das Ausgangsmaterial (2) durch die Düse gefördert wird.

4. Verfahren nach Anspruch 1 oder 2, **dadurch gekennzeichnet, dass** das Ausgangsmaterial (2) ein thermoplastisches Material umfasst und das Ausgangsmaterial (2) zum Fördern durch die Düse (1) erwärmt und/oder plastifiziert wird.

5. Verfahren nach Anspruch 1 oder 2, **dadurch gekennzeichnet, dass** das Ausgangsmaterial (2) als Filament bereitgestellt wird.

6. Verfahren nach einem der vorhergehenden Ansprüche, **dadurch gekennzeichnet, dass** das Volumenelement (7) mit dem Substrat (5) und/oder dem bereits aufgetragene Volumenelement (7) bei dem Aufsetzen formschlüssig verbunden wird.

7. Verfahren nach einem der vorhergehenden Ansprüche, **dadurch gekennzeichnet, dass** das Volumenelement (7) nach dem Aufsetzen plastisch verformt wird.

8. Verfahren nach einem der vorhergehenden Ansprüche, **dadurch gekennzeichnet, dass** zum Aufsetzen des Volumenelements (7) der Teil des Ausgangsmaterials (2) von der Düse (1) getrennt wird.

9. Verfahren nach einem der vorhergehenden Ansprüche, **dadurch gekennzeichnet, dass** eine Oberfläche des Substrat (5) und/oder des bereits aufgetragenen Volumenelements (7) vor dem Aufsetzen des Volumenelements (7) vorbehandelt wird.

10. Verfahren nach einem der vorhergehenden Ansprüche, **dadurch gekennzeichnet, dass** nach dem Aufsetzen zumindest eines Volumenelements (7) eine Kühlung und/oder Trocknung mittels eines Gasstroms durchgeführt wird.
